# EUROPÄISCHE PATENTSCHRIFT

(11) **EP 1 074 455 B1**
(45) Veröffentlichungstag und Bekanntmachung des Hinweises auf die Patenterteilung: **02.05.2002**
(21) Anmeldenummer: 99112862.0
(22) Anmeldetag: 03.07.1999
(51) Int. Cl.: B62D 15/02

(54) **Lenkwinkelsensoreinrichtung zum Erfassen der Winkelstellung des Lenkrades eines Kraftfahrzeuges**
Steering angle sensor apparatus for detecting the angular position of a steering wheel in a motor vehicle
Appareil de capteur de l'angle de braquage de détection de position angulaire d'un volant de direction de véhicule automobile

(43) Veröffentlichungstag der Anmeldung: 07.02.2001
(73) Patentinhaber: Leopold Kostal GmbH & Co. KG, 58507 Lüdenscheid (DE); MTS Systems Corporation Sensors Devision, Cary, NC 27513 (US)
(72) Erfinder: Bendicks, Norbert, Dipl.-Ing., 58675 Hemer (DE); Böbel, Ralf, Dipl.-Ing., 44269 Dortmund (DE); Bläsing, Frank, Dipl.-Ing, 59457 Werl (DE); Nyce, David, Apex, NC 27502 (US)
(74) Vertreter: Schröter & Haverkamp

(56) Entgegenhaltungen:
- EP-A- 0 325 787
- DE-A- 19 810 158
- US-A- 5 886 518

## Beschreibung

Die Erfindung betrifft eine Lenkwinkelsensoreinrichtung zum Erfassen der Winkelstellung des Lenkrades eines Kraftfahrzeuges umfassend einen an die Drehbewegung des Lenkrades gekoppelten Geber und ein bezüglich der Drehbewegung des Gebers feststehendes Aufnahmemittel zur Aufnahme von Gebersignalen, wobei das Aufnahmemittel und der Geber dergestalt zueinander angeordnet sind, daß die von dem Aufnahmemittel erfaßten Gebersignale die relative Position zwischen dem Lenkrad und dem Aufnahmemittel wiedergeben.

Eine Erfassung der Winkelstellung des Lenkrades eines Kraftfahrzeuges wird benötigt, um mit diesem Wert beispielsweise ein Fahrdynamiksystem zu beaufschlagen oder um etwa eine elektronisch realisierte selbsttätige Rückstellung eines Fahrrichtungsanzeigers nach einer Kurvenfahrt herbeizuführen. Ein optoelektronisch arbeitendes Positionserfassungssystem für eine solche Lenkwinkelbestimmung ist aus der DE 40 22 837 A1, die eine Lenkwinkelsensoreinrichtung nach dem Oberbegriff des Anspruchs 1 offenbare, bekannt. Die in diesem Dokument offenbarte Lenkwinkelsensoreinrichtung besteht aus zwei parallel und mit Abstand zueinander angeordneten Elementen - einer Lichtquelle und einer Sensorzeile - sowie einer zwischen der Lichtquelle und der Sensorzeile angeordneten, als Geber ausgebildeten Codescheibe, die an die Bewegung der Lenksäule gekoppelt ist. Die Lichtquelle und die Sensorzeile sind bezüglich der Geberscheibe dagegen ortsfest angeordnet. Die Geberscheibe ist als Lichtschlitzscheibe ausgebildet und umfaßt als Abtastspur eine sich von innen nach außen vergrößernde Spirale. In Abhängigkeit von dem Lenkwinkeleinschlag werden unterschiedliche Pixel der Sensorzeile durch unterschiedliche Bereiche der Abtastspur beleuchtet. In Abhängigkeit davon, welche Pixel bzw. Pixelcluster bei der jeweiligen Lenkradstellung beleuchtet werden, erfolgt eine Bestimmung des Lenkwinkels innerhalb eines 360°-Kreises.

Die Meßgenauigkeit derartiger optoelektronischer Lenkwinkelsensoreinrichtungen ist durch die Genauigkeit und die Feinheit der verwendeten Abtastspuren der Geberscheibe sowie durch die Abbildungsschärfe der Lichtspuren auf der photosensitiven Oberfläche der Sensorzeile bestimmt. Sind hohe Genauigkeiten gefordert, müssen sehr aufwendig strukturierte Lichtschlitzscheiben bereitgestellt werden. Daneben besteht bei derartigen optoelektronischen Lenkwinkelsensoreinrichtungen die Gefahr, daß sowohl die sehr fein gearbeiteten Lichtschlitze als auch die photosensitive Oberfläche des Zeilensensors verschmutzen können, so daß eine Lenkwinkelerfassung beeinträchtigt sein kann.

Ausgehend von diesem diskutierten Stand der Technik liegt der Erfindung daher die Aufgabe zugrunde, eine berührungslos arbeitende Lenkwinkelsensoreinrichtung zum Erfassen der Winkelstellung des Lenkrades eines Kraftfahrzeuges vorzuschlagen, die gegenüber Verschmutzungen unanfällig ist.

Diese Aufgabe wird erfindungsgemäß dadurch gelöst, daß als Geber zumindest ein Gebermagnet an die Drehbewegung des Rotors gekoppelt ist und daß als Aufnahmemittel ein magnetostriktives Wandlerelement (Magnetostriktionswandler) mit einer langgestreckten, sich über einen bestimmten Kreisbogenbereich erstreckenden, magnetostriktiv reagierenden Wandlerleitung und mit einem an einem Ende der Wandlerleitung angeordneten Schwingungssensor vorgesehen ist, welches Magnetfeld des Gebermagnets die Wandlerleitung in Abhängigkeit von der Stellung des Lenkrades an unterschiedlichen Stellen beaufschlagt.

Da durch Verwendung eines Magnetostriktionswandler als Aufnahmemittel dieser durch die Gebersignale eines Magneten beaufschlagt wird, ist gewährleistet, daß auch bei einer Verschmutzung von Geber- oder Aufnahmemittel jederzeit eine einwandfreie Lenkwinkelerfassung möglich ist. Das magnetostriktive Wandlerelement besteht aus einer Wandlerleitung, die einen elektrischen Innenleiter aus einem magnetostriktiven Material und einem magnetisch neutralen elektrischen Rückleiter umfaßt. Ein dem Geber zugeordneter Magnet ist zweckmäßiger Weise dergestalt in Bezug auf die Wandlerleitung angeordnet, daß dessen einer Pol zur äußeren Oberfläche der Wanderleitung weisend angeordnet ist. In Abhängigkeit von der Winkelstellung des Lenkrades beaufschlagt das Magnetfeld dieses Magneten an unterschiedlichen Stellen die Wandlerleitung. An einem Ende der Wandlerleitung ist eine Tauchspule angeordnet, die zur Aufnahme eines magnetostriktiv ausgelösten und durch den Wellenleiter als Körperschallwelle zu dem Schwingungssensor transportierten Impulses in Form einer Permeabilitätsänderung des Spulenankers ausgeleget ist. Ein solcher Impuls wird bei gepulster Bestromung des Wellenleiters von dem von diesem Leiter ausgehenden elektrischen Feld an derjenigen Stelle erzeugt, an der die Feldlinien des Gebermagneten in den Wellenleiter der Wandlerleitung eingekoppelt werden. Die Laufzeit des Spannungsimpulses von dem Ort seiner Entstehung (= Position des Gebermagneten) bis zum Schwingungssensor dient als Maß zur Ortsbestimmung des Gebermagneten und somit als Maß der Winkelstellung des Lenkrades.

Die Geberleitung kann sich über einen bestimmten Kreisbogenbereich erstreckend in demjenigen Abstand um die Lenksäule gebogen angeordnet sein, in dem sich der an die Drehbewegung der Lenksäule gekoppelte Gebermagnet befindet. Eine solche Wandlerleitung kann sich in Abhängigkeit von der Ausgestaltung des Magnetostriktionswandlers um Kreisbogenbereiche erstrecken, die kleiner als 360° sind und beispielsweise 180° betragen können. Zur Erfassung der Lenkradstellung in einem 360° Erfassungsbereich ist es bei Vorsehen einer Wandlerleitung, die sich um einen Kreisbogenbereich erstreckt, der kleiner als 360° ist notwendig, dem Geber zumindest so viele Gebermagnete zuzuordnen, daß in jeder Lenkradstellung das Magnetfeld zumindest eines Gebermagneten in die Wandlerleitung induziert wird. Eine solche Ausgestaltung ist insbesondere bei beengten Einbauverhältnissen zweckmäßig. Die Gebermagnete können zu ihrer Unterscheidung unterschiedlich codiert sein.

Bei einer Verwendung einer lediglich einen Kreisbogenbereich kleiner 360° sich erstreckenden Wandlerleitung kann vorgesehen sein, als Geber einen in gleich große Segmente unterteilten thermoplastischen Magnetring vorzusehen, in welchen Segmenten unterschiedlich codierte magnetische Bereiche angeordnet sind. Jedes dieser einzelnen Geberringsegmente besitzt einen charakteristischen Magnetcode, der sich eindeutig von denjenigen der übrigen Segmente unterscheidet. Die magnetische Codierung erfolgt zweckmäßiger Weise über die magnetische Feldstärke, so daß dann nicht nur die Laufzeit des Spannungsimpulses sondern auch dessen Intensität zur Auswertung gelangt.

Soll mit der Lenkwinkelsensoreinrichtung eine über 360° hinausgehende Winkelstellung des Lenkrades eines Kraftfahrzeuges erfaßt werden, kann vorgesehen sein, den Kreisbogenbereich der Wandlerleitung sich über mehrere 360°-Kreise erstreckend wendelförmig auszubilden, wobei die Anzahl der Wendel der Anzahl der möglichen Lenkradumdrehungen entsprechend vorgesehen ist. Ein oder mehrere Gebermagnete sind dann innenseitig bezüglich der Wandlerleitungswendel geführt. Zum Gewährleisten, daß die Wandlermagnete beim Drehen des Lenkrades der Wendelsteigung folgen, ist in einem Ausführungsbeispiel vorgesehen, daß die wendelförmige Wandlerleitung auf einer der Lenksäule zugeordneten Spindel angeordnet ist, so daß beim Drehen des Lenkrades die Wandlerleitung längsachsial bezüglich der Lenksäule bewegbar ist.

Der oder die Gebermagnete können auch drehfest an die Lenksäule gekoppelten Geberarmen, Geberringen oder auch Geberscheiben angeordnet sein. Dabei kann vorgesehen sein, auf diesen Geberelementen die magnetischen Bereiche entweder durch Aufmagnetisieren oder durch entsprechende Anordnung einzelner Magnete bereitzustellen.

In einem weiteren Ausführungsbeispiel ist vorgesehen, daß über eine mechanische Kopplung die rotatorische Drehbewegung der Lenkspindel in eine translatorische Bewegung des Gebermagneten umgesetzt wird. Das mit dem Gebermagnet zusammenwirkende magnetostriktive Wanderelement kann gradlinig oder auch wendelförmig ausgebildet und gegenüberliegend der Bewegungsspur des Gebermagneten angeordnet sein.

In einem weiteren Ausführungsbeispiel der Erfindung sind mehrere Gebermagneten vorgesehen, die einen ungleichen Winkelabstand zueinander aufweisen. Bei einem Einsatz von drei Gebermagneten kann der Winkelabstand zwischen den ersten beiden beispielsweise 110°, der Winkelabstand zwischen dem zweiten und dritten 120° und der Winkelabstand zwischen dem dritten und dem ersten 130° betragen. Mit einer solchen codierten Anordnung ist eine Gebermagnetdetektion innerhalb der erfaßten Winkelstrecke durch das magnetostriktive Wandlerelement möglich, so daß mit einer solchen Ausgestaltung auch eine Rundenzählung realisierbar ist.

Weitere Vorteile und Weiterbildungen der Erfindung sind Bestandteil der nachfolgenden Beschreibung sowie der übrigen Unteransprüche. Es zeigen:
- **Fig. 1**: Eine schematische Darstellung nach Art einer Draufsicht einer magnetostriktiven Lenkwinkelsensoreinrichtung in einer ersten Ausgestaltung,
- **Fig. 1a**: erfaßbare Impulsverläufe bei unterschiedlich konfigurierten Gebermagneten,
- **Fig. 2**: eine schematische Darstellung nach Art einer Draufsicht einer magnetostriktiven Lenkwinkelsensoreinrichtung gemäß einer weiteren Ausgestaltung,
- **Fig. 3**: in einer schematisierten Ansicht die in Figur 2 gezeigte magnetostriktive Lenkwinkelsensoreinrichtung,
- **Fig. 4**: eine schematisierte Darstellung nach Art einer Längsschnittdarstellung einer magnetostriktiven Lenkwinkelsensoreinrichtung gemäß einer weiteren Ausgestaltung,
- **Fig. 5**: eine schematisierte Darstellung einer magnetostriktiven Lenkwinkelsensoreinrichtung gemäß noch einer weiteren Ausgestaltung und
- **Fig. 6**: einen Querschnitt durch die Lenkwinkelsensoreinrichtung der Figur 5 entlang der Linie A-B.

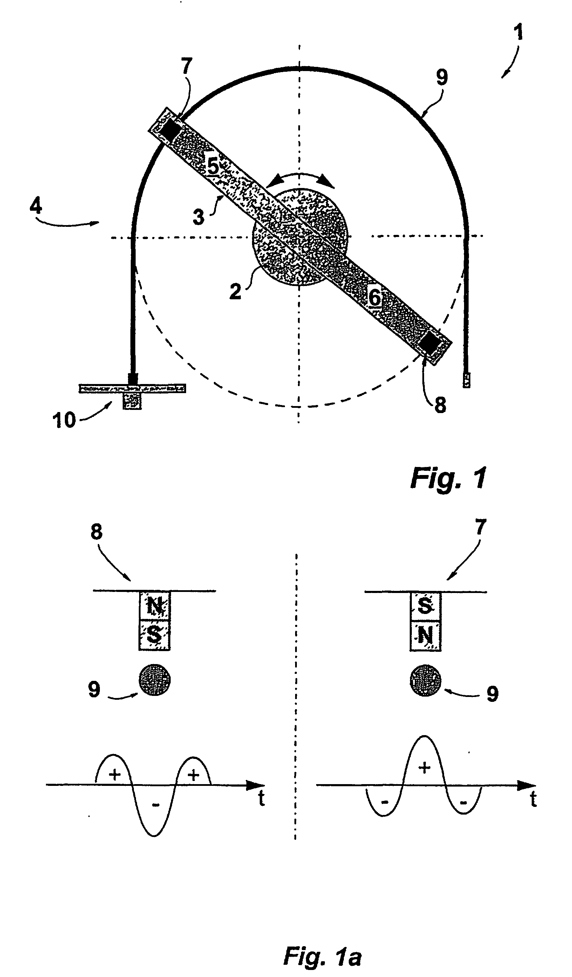

Die in Figur 1 gezeigte Lenkwinkelsensoreinrichtung 1 besteht aus einem drehfest an einer Lenksäule 2 befestigten Geberbalken 3 und einem Magnetostriktionswandler 4. Der Geberbalken 3 trägt im Bereich der Enden seiner beiden Geberarme 5, 6 jeweils einen Gebermagneten 7, 8. Die Gebermagnete 7, 8 sind in dem in Figur 1 dargestellten Ausführungsbeispiel bezüglich ihres Feldlinienverlaufes so angeordnet, daß der magnetische Nordpol des Gebermagneten 7 und der magnetische Südpol des Gebermagneten 8 stimseitig zum Magnetostriktionswandler 4 und somit zur Blattebene weist.

Der Magnetostriktionswandler 4 besteht aus einer Wandlerleitung 9, an deren einem Ende ein Schwingungssensor 10 angeordnet ist. Die Wandlerleitung 9 ist in einem gleichbleibenden Radius ortsfest bezüglich der Lenksäule 2 bzw. des Geberbalkens 3 einen Halbkreis beschreibend angeordnet. Der Radius des durch die Wandlerleitung 9 beschriebenen Bogens entspricht demjenigen, auf dem die Gebermagnete 7, 8 beim Drehen der Lenksäule 2 bewegt werden.

Die Wandlerleitung 9 umfaßt einen Wellenleiter aus einem magnetostriktiven Werkstoff. Nicht näher dargestellt ist eine dem Schwingungssensor 10 und der in der Wandlerleitung 9 enthaltenen elektrischen Leitung zugeordnete Steuer- und Auswerteelektronik, die die elektrische Leitung in einem vorbestimmten Takt mit Strom beaufschlagt und in der zur Lenkwinkelbestimmung eine Laufzeitermittlung der von dem Schwingungssensor 10 empfangenen Spannungsimpulse in Abhängigkeit von der Stellung des die Wandlerleitung 9 beaufschlagenden Gebermagneten 7 oder 8 sowie eine Impulsverlaufsermittlung erfolgt. Aus dem in Figur 1 gezeigten Ausführungsbeispiel wird deutlich, daß in jeder Stellung des Lenkrades bzw. der Lenksäule 2 die Wandlerleitung 9 zumindest im Einfluß des Magnetfeldes eines Gebermagnetes 7 oder 8 ist. Die unterschiedliche Anordnung der beiden Gebermagnete 7, 8 bezüglich ihrer Polarität zur Wandlerleitung 9 bedingt einen jeweils unterschiedlichen Impulsverlauf in Abhängigkeit von dem die Wandlerleitung 9 beaufschlagenden Gebermagneten 7 oder 8. Diese Impulse zeichnen sich, wie in Figur 1a dargestellt, durch unterschiedliche Polaritäten ihrer Verläufe aus. So ist der erfaßbare Impulsverlauf bei Beaufschlagung der Wandlerleiter 9 durch den Gebermagneten 8 durch eine positive Vor- und Nachschwingung bei einer negativen Hauptschwingung gekennzeichnet, während der Impulsverlauf bei Beaufschlagen der Wandlerleitung 9 durch den Gebermagneten 7 in umgekehrter Polarität und somit mit negativer Vor- und Nachschwingung und positiver Hauptschwingung gekennzeichnet ist Mit einer solchen Anordnung lassen sich Lenkwinkel innerhalb von 360° erfassen.

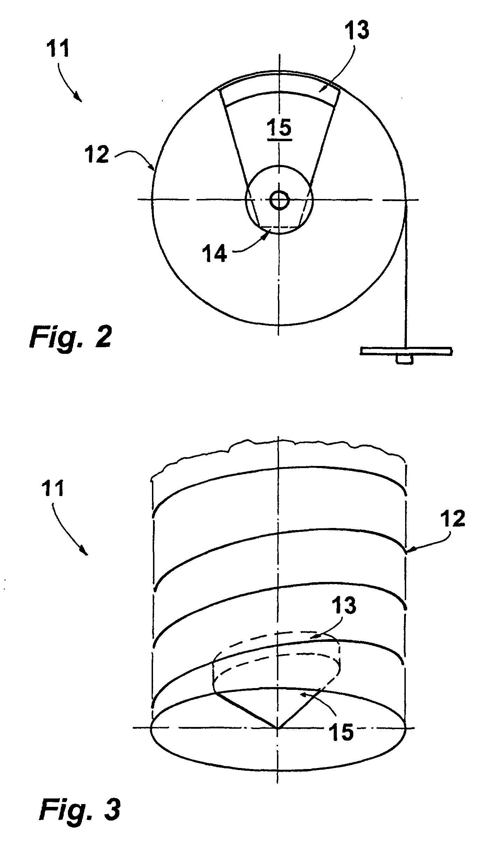

In einem weiteren Ausführungsbeispiel einer magnetostriktiven Lenkwinkelsensoreinrichtung 11 ist, wie in den Figuren 2 und 3 dargestellt, die Wandlerleitung 12 wendelförmig angeordnet, wobei die Anzahl der Wendel der Wandlerleitung 12 der Anzahl der möglichen Lenkradumdrehungen entspricht. Als Geber ist ein einzelner Gebermagnet 13, der endseitig auf einem an der Lenksäule 14 angeordneten Geberarm 15 befestigt ist, vorgesehen. Der Gebermagnet 13 ist innenseitig bezüglich der Wandlerleitung 12 geführt. In der Geradeausstellung des Lenkrades und somit in der Nullstellung der Lenksäule 14 befindet sich der Gebermagnet 13 etwa in der Mitte der Wandlerleitungslänge. Erfolgt ein Lenkradeinschlag in die eine oder in die andere Richtung können mit dieser Lenkwinkelsensoreinrichtung 11 Lenkwinkel auch über mehrere Umdrehungen hinweg erfaßt werden. Damit der Gebermagnet 13 beim Drehen des Lenkrades der Steigung der Wendel entsprechend innenseitig an dieser entlang geführt wird, ist in einem Ausführungsbeispiel vorgesehen, die Wandlerleitung 12 auf einer auf der Lenksäule 14 befindlichen Spindel anzuordnen, so daß diese beim Drehen des Lenkrades entsprechend der Lenkrichtung achsial zum Lenkrad hin oder vom Lenkrad weg bewegt wird. Ebenfalls kann vorgesehen sein, den Geberarm 15 so anzuordnen, daß dieser der Steigung einer feststehenden, der Wandlerleitung 12 entsprechenden Wandlerleitung beim Drehen des Lenkrades folgt.

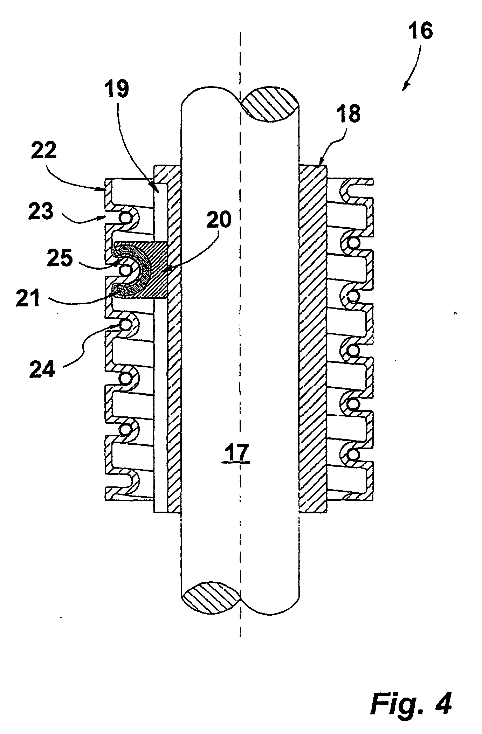

Figur 4 zeigt eine weitere Lenkwinkelsensoreinrichtung 16, die prinzipiell ähnlich aufgebaut ist wie die Lenkwinkelsensoreinrichtung 11 der Figuren 2 und 3. In einem Abschnitt der Lenksäule 17 ist eine drehfest an die Bewegung der Lenksäule 17 gekoppelte Hülse 18 angeordnet. Die Hülse 18 weist einen Längsschlitz 19 auf, in dem ein in einem Kulissenstein 20 integrierter Gebermagnet 21 angeordnet ist. Die Hülse 18 ist zweiteilig ausgebildet, so daß diese nachträglich um die Lenksäule 17 gelegt werden kann. Die drehfeste Kopplung zwischen den beiden Elementen 17 und 18 erfolgt beispielsweise durch einen Mitnehmerstift oder durch andere bekannte Maßnahmen.

Die Hülse 18 und der Gebermagnet 21 sind von einem Kunststoffmantel 22 umgeben, in dem eine eingängige wendelförmige Nut 23 zur Lenksäule 17 hin gerichtet eingebracht ist. In der Nut 23 ist eine magnetostriktive Wandlerleitung 24 angeordnet.

Die zum Kunststoffmantel 22 weisende Seite des Gebermagneten 21 bzw. des Kulissensteins 20 weist eine Aufnahme 25 auf, so daß in die Aufnahme 25 die Innenseite der Nut 23 aufgenommen ist. Der Gebermagnet 21 ist daher C-förmig ausgebildet. Auf diese Weise ist die Position des Gebermagneten durch ein gleichmäßigeres auf die Wandlerleitung 4 wirkendes magnetisches Feld detektierbar. Dabei ist es zweckmäßig, daß die Aufnahme 25 geringfügig hinterschnitten ist, so daß der Kulissenstein 20 bzw. der Gebermagnet 21 mit einer geringen Vorspannung an den Nutenwänden verklammert gehalten ist, damit eine möglichst spielfreie Kopplung zwischen dem Gebermagneten 21 und der Nut 23 bzw. der darin enthaltenen Wandlerleitung 24 gegeben ist. Bei einer Drehung der Lenksäule 17 wird der in dem Längsschlitz 19 gehaltene Kulissenstein 20 in einer zur Bewegung der Lenksäule 17 translatorischen Bewegung parallel zur Längsachse der Lenksäule 17 bewegt. Dabei gleitet in der Aufnahme 25 des Kulissensteins 20 die Nut 23, so daß in Abhängigkeit von der Drehstellung und der Drehbewegung der Lenksäule 17 der Gebermagnet jeweils an unterschiedlichen Positionen bezüglich der wendelförmigen Nut 23 und der darin enthaltenen Wandlerleitung 24 angeordnet ist. Mit einer solchen Ausgestaltung ist ein Lenkwinkelsensor mit einem sehr hohen Auflösungsvermögen und somit mit einer hohen Genauigkeit der Winkelerfassung realisierbar.

Ist ein hohes Auflösungsvermögen nicht notwendig, kann vorgesehen sein, wie in einem nicht dargestellten und nicht erfindungsgemäßen Ausführungsbeispiel verwirklicht, daß der Gebermagnet lediglich in dem Längsschlitz der Hülse translatorisch verschiebbar ist und daß die magnetostriktive Wandlerleitung parallel zur Bewegung des Gebermagneten angeordnet ist, wie zum Beispiel aus der EP.325 787 A bekannt ist.

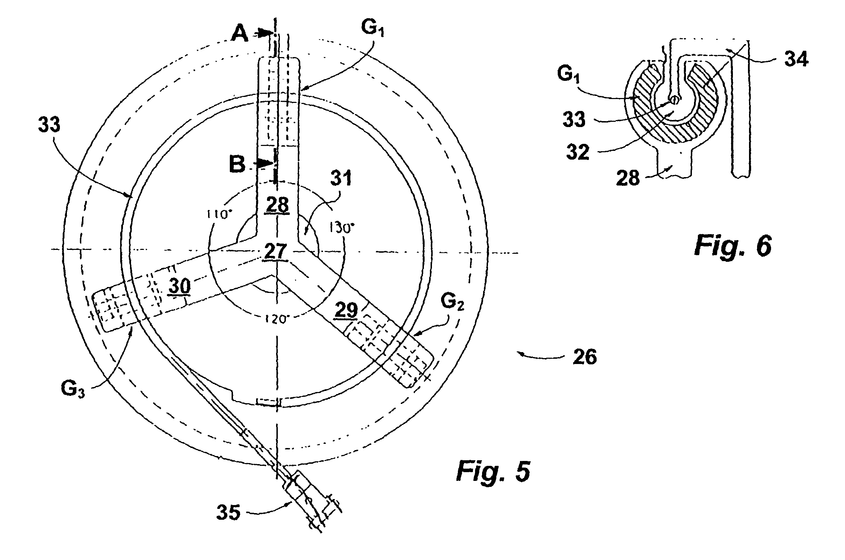

In den Figuren 5 und 6 ist eine weitere Lenkwinkelsensoreinrichtung 26 gezeigt, mit der eine Winkelerfassung über 360° hinaus möglich ist. Bei dieser Lenkwinkelsensoreinrichtung 26 sind drei Gebermagneten G₁, G₂, G₃ auf einem Tragkörper 27 mit drei von dem Tragkörper 27 radial abragenden Armen 28, 29, 30 angeordnet. Der Tragkörper 27 ist drehfest an die Drehbewegung der Lenkspindel 31 gekoppelt. Die Arme 28 - 30 des Tragkörpers 27 sind mit einem jeweils unterschiedlichen Winkelabstand zueinander angeordnet. Der Winkelabstand zwischen dem Tragarm 28 und dem Tragarm 29 beträgt 130°, derjenige zwischen dem Tragarm 29 und dem Tragarm 30 120° und derjenige zwischen dem Tragarm 30 und wiederum dem ersten Tragarm 28 110°. Die drei Gebermagneten G₁, G₂ und G₃ weisen somit einen unterschiedlichen Winkelabstand zueinander auf. Die Gebermagnete G₁ - G₃ sind, wie in dem in Figur 6 gezeigten Querschnitt des Gebermagneten G₁ gezeigt, ein Kreissegment bildend ausgebildet, wobei in der von dem Gebermagnet G₁ eingeschlossenen Aufnahme 32 eine magnetostriktive Wandlerleitung 33 an einem Halter 34 befestigt aufgenommen ist. Die magnetostrikive Wandlerleitung 33 ist ortsfest bezüglich der Anordnung der Gebermagnete G₁ - G₃, so daß bei einer Drehbewegung der Lenksäule 31 die Gebermagnete G₁ - G₃ eine entsprechende Drehbewegung mitmachen und somit an unterschiedlichen Positionen de Wandlerleitung 33 befindlich sind. Die magnetostriktive Wandlerleitung 33 ist über einen Umfang von zumindest 180° bezüglich der Trägerarme 28 - 30 angeordnet. Bei dem in Figur 5 dargestellten Ausführungsbeispiel beträgt die ausnutzbare Winkelstrecke der Wandlerleitung 33 etwa 350°. Bei diesem Ausführungsbeispiel kann daher jeweils die Position von zumindest zwei Gebermagneten erfaßt werden, wobei durch den unterschiedlichen Winkelabstand der einzelnen Gebermagnete G₁ - G₃ zueinander eine Rundenzählung ermöglicht ist. Dies erlaubt gleichfalls eine eindeutige Identifizierung der beabstandeten Magnetfelder, so daß externe, auf die Wandlerleitung 33 einwirkende magnetische Einflüsse, die auf die Wandlerleitung 33 nicht innerhalb des durch die Gebermagnete G₁ - G₃ vorbestimmten Winkelabstandes wirken, ignoriert werden können.

Im Gegensatz zu einer Gebermagnetidentifizierung durch eine entgegengesetzte magnetische Ausrichtung, wie beispielsweise in dem Ausführungsbeispiel zu Figur 1 angegeben, erfolgt eine Gebermagnetidentifizierung bei dem Ausführungsbeispiel gemäß der Figuren 5 und 6 durch die unterschiedlichen Winkel, die die Gebermagnete G₁ - G₃ zueinander aufweisen. Ein Auswerteschaltkreis bestimmt die "Impulszeiten" zwischen dem Abfrageimpuls und jedem der ersten beiden empfangenen Impulse infolge der Gebermagnetpositionen. Diese beiden Impulse können auch als "Impuls t₁" und "Impuls t₂" bezeichnet werden. Die Differenz der beiden Impulse entspricht der Identität der Gebermmagnete, beispielsweise der Gebermagneten G₃ - G₁. Der Impuls t₁ stellt die gemessene Drehbewegung von einer angenommenen Nullstelle bis etwa 120° dar. Dieses Meßergebnis resultiert, wenn der Impuls t₁ infolge der Position des Gebermagneten G₃ aufgenommen worden ist. Wenn der Impuls t₁ jedoch aufgrund des Gebermagneten G₂ empfangen worden ist, dann werden 120° zu der gemessenen Drehbewegung addiert, so daß die Summe das Meßergebnis darstellt. Wenn der Impuls t₁ aus der Position des Gebermagneten G₁ resultiert, dann werden 250° zu der gemessenen Drehbewegung addiert, so daß diese Summe das Meßergebnis darstellt. Auf diese Weise können auch bei Vorsehen einer um weniger als um 360° sich erstreckenden Wandlerleitung Rundenzählungen durchgeführt werden.

### Zusammenfassung der Bezugszeichen:

- 1: Lenkwinkelsensoreinrichtung
- 2: Lenksäule
- 3: Geberbalken
- 4: Magnetostriktionswandler
- 5: Geberarm
- 6: Geberarm
- 7: Gebermagnet
- 8: Gebermagnet
- 9: Wandlerleitung
- 10: Schwingungssensor
- 11: Lenkwinkelsensoreinrichtung
- 12: Wandlerleitung
- 13: Gebermagnet
- 14: Lenksäule
- 15: Geberarm
- 16: Lenkwinkelsensoreinrichtung
- 17: Lenksäule
- 18: Hülse
- 19: Längsschlitz
- 20: Kulissenstein
- 21: Gebermagnet
- 22: Kunststoffmantel
- 23: Nut
- 24: Wandlerleitung
- 25: Aufnahme
- 26: Lenkwinkelsensoreinrichtung
- 27: Tragkörper
- 28-30: Tragearm
- 31: Lenksäule
- 32: Aufnahme
- 33: magnetostriktive Wandlerleitung
- 34: Halter
- 35: Schwingungssensor

- G₁-G₃: Gebermagnete
- t₁, t₂: Impuls

## Patentansprüche

1. Lenkwinkelsensoreinrichtung zum Erfassen der Winkelstellung des Lenkrades eines Kraftfahrzeuges umfassend einen an die Drehbewegung des Lenkrades gekoppelten Geber (7, 8; 13; 21; G₁-G₃) und ein bezüglich der Drehbewegung des Gebers (7, 8; 13; 21; G₁-G₃) feststehendes Aufnahmemittel (4) zur Aufnahme von Gebersignalen, wobei das Aufnahmemittel (4) und der Geber (7, 8; 13; 21; G₁-G₃) dergestalt zueinander angeordnet sind, daß die von dem Aufnahmemittel (4) erfaßten Gebersignale die relative Position zwischen dem Lenkrad und dem Aufnahmemittel (4) wiedergeben, **dadurch gekennzeichnet, daß** als Geber (7, 8; 13; 21; G₁-G₃) zumindest ein Gebermagnet an die Drehbewegung des Lenkrades gekoppelt ist und daß als Aufnahmemittel ein magnetostriktives Wandlerelement (4) mit einer langgestreckten, sich über einen bestimmten Kreisbogenbereich erstrekkenden, magnetostriktiv reagierenden Wandlerleitung (9, 12; 21, 33) und mit einem an einem Ende der Wandlerleitung (9, 12; 21, 33) angeordneten Schwingungssensor (10, 35) vorgesehen ist, wobei das Magnetfeld des Gebermagnets (7, 8; 13; 21; G₁-G₃) die Wandlerleitung (9, 12; 21, 33) in Abhängigkeit von der Stellung des Lenkrades an unterschiedlichen Stellen beaufschlagt.

2. Lenkwinkelsensoreinrichtung nach Anspruch 1, **dadurch gekennzeichnet, daß** sich die Wandlerleitung (9, 33) über einen Kreisbogenbereich erstreckt, der kleiner als 360°, insbesondere kleiner oder gleich 180° ist, und daß dem Geber zumindest eine solche Anzahl an Gebermagneten (7, 8; G₁-G₃) zugeordnet ist, daß die Wandlerleitung (9, 33) in jeder Lenkradstellung zumindest von dem Magnetfeld eines Gebermagneten (7, 8; G₁-G₃) beaufschlagt ist.

3. Lenkwinkelsensoreinrichtung nach Anspruch 1, **dadurch gekennzeichnet, daß** die Wandlerleitung (12, 21) sich über mehrere Vollkreise erstreckend wendelförmig ausgebildet ist und über eine der Anzahl der möglichen Lenkradumdrehungen entsprechende Anzahl von Wendeln verfügt und daß der oder die Gebermagnete beim Drehen des Lenkrades innenseitig an der wendelförmig angeordneten Wandlerleitung (12) geführt sind.

4. Lenkwinkelsensoreinrichtung nach Anspruch 3, **dadurch gekennzeichnet, daß** die Wandlerleitung (12) auf einer der Lenksäule (14) zugeordneten Spindel angeordnet ist, so daß beim Drehen des Lenkrades die Wandlerleitung (12) längsachsial bezüglich der Lenksäule (14) bewegbar ist.

5. Lenkwinkelsensoreinrichtung nach einem der Ansprüche 1 bis 4, **dadurch gekennzeichnet, daß** als Geber eine durch umfänglich unterschiedlich codierte magnetische Bereiche segmentierte Geberscheibe vorgesehen ist.

6. Lenkwinkelsensoreinrichtung nach Anspruch 5, **dadurch gekennzeichnet, daß** die magnetischen Gebersegmente unterschiedliche Feldstärken in den magnetischen Bereichen aufweisen.

7. Lenkwinkelsensoreinrichtung nach Anspruch 5, **dadurch gekennzeichnet, daß** die magnetischen Gebersegmente (7, 8) bezüglich ihrer Polaritätsanordnung zur Wandlerleitung (9) gegensinnig angeordnet sind, so daß ein aus der Beaufschlagung der Wandlerleitung (9) mit dem magnetischen Gebersegment (7) unterschiedlicher Impulsverlauf verglichen mit einer Beaufschlagung der Wandlerleitung (9) mit dem magnetischen Gebersegment (8) erfaßbar ist.

8. Lenkwinkelsensoreinrichtung nach Anspruch 1 oder 2, **dadurch gekennzeichnet, daß** zumindest zwei Gebermagnete (G₁-G₃) vorgesehen sind, die mit einem unterschiedlichen Winkelabstand zueinander angeordnet sind, so daß die Gebermagnete (G₁-G₃) in einer asymmetrischen Anordnung zueinander vorgesehen sind.

9. Lenkwinkelsensoreinrichtung nach Anspruch 8, **dadurch gekennzeichnet, daß** die Gebermagnete (21; G₁-G₃) C-förmig ausgebildet sind und daß innerhalb der C-förmigen Aufnahme (25, 32) die magnetostriktive Wandlerleitung (24, 33) geführt ist.

## Claims

1. Steering angle sensor arrangement for detecting the angular position of the steering wheel of an automotive vehicle, said arrangement including a transmitter (7, 8; 13; 21; G₁-G₃), which is coupled to the rotary movement of the steering wheel, and a receiving means (4), which is stationary with reference to the rotary movement of the transmitter (7, 8; 13; 21; G₁-G₃), for receiving transmitter signals, the receiving means (4) and the transmitter (7, 8; 13; 21; G₁-G₃) being disposed relative to each other in such a manner that the transmitter signals, detected by the receiving means (4), reproduce the relative position between the steering wheel and the receiving means (4), **characterised in that** at least one transmitter-type magnet is coupled to the rotary movement of the steering wheel as the transmitter (7, 8; 13; 21; G₁-G₃), and **in that** a magnetostrictive converter element (4) is provided as the receiving means, said element having an elongate converter line (9, 12; 21, 24, 33) which extends over a predetermined arcuate region and reacts magnetostrictively, and having an oscillation sensor (10, 35) disposed at one end of the converter line (9, 12; 21, 24, 33), the magnetic field of the transmitter-type magnet (7, 8; 13; 21; G₁-G₃) acting upon the converter line (9, 12; 21, 24, 33) in dependence on the position of the steering wheel at variable locations.

2. Steering angle sensor arrangement according to claim 1, **characterised in that** the converter line (9, 33) extends over an arcuate region which is smaller than 360°, more especially smaller than or equal to 180°, and **in that** the transmitter has associated therewith at least such a number of transmitter-type magnets (7, 8; G₁-G₃) that the converter line (9, 33) in each steering wheel position is acted upon at least by the magnetic field of one transmitter-type magnet (7, 8; G₁-G₃).

3. Steering angle sensor arrangement according to claim 1, **characterised in that** the converter line (12, 21, 24) extends helically over a plurality of complete circles and has a number of helixes corresponding to the number of possible steering wheel turns, and **in that** the transmitter-type magnet or magnets are guided on the inside of the helically disposed converter line (12) during the rotation of the steering wheel.

4. Steering angle sensor arrangement according to claim 3, **characterised in that** the converter line (12) is disposed on a spindle, associated with the steering column (14), so that, during the rotation of the steering wheel, the converter line (12) is displaceable along the longitudinal axis with reference to the steering column (14).

5. Steering angle sensor arrangement according to one of claims 1 to 4, **characterised in that** a transmitter disc is provided as the transmitter, which disc is segmented by magnetic regions which are variably encoded circumferentially.

6. Steering angle sensor arrangement according to claim 5, **characterised in that** the magnetic transmitter segments have variable field strengths in the magnetic regions.

7. Steering angle sensor arrangement according to claim 5, **characterised in that** the magnetic transmitter segments (7, 8) are disposed in opposite directions with reference to the disposition of their polarities relative to the converter line (9), so that a pulse configuration path, which is variable as a result of the converter line (9) being acted upon by the magnetic transmitter segment (7), is detectable when compared with the converter line (9) being acted upon with the magnetic transmitter segment (8).

8. Steering angle sensor arrangement according to claim 1 or 2, **characterised in that** at least two transmitter-type magnets (G₁-G₃) are provided, which are disposed at a variable angular spacing from each other so that the transmitter-type magnets (G₁-G₃) are provided in an asymmetrical disposition relative to each other.

9. Steering angle sensor arrangement according to claim 8, **characterised in that** the transmitter-type magnets (21; G₁-G₃) are C-shaped, and **in that** the magnetostrictive converter line (24, 33) is guided internally of the C-shaped receiver (25, 32).

## Revendications

1. Appareil de capteur de l'angle de braquage de détection de position angulaire d'un volant de direction de véhicule automobile comprenant un transmetteur (7, 8 ; 13 ; 21 ; G₁-G₃) couplé au mouvement de rotation du volant et un récepteur (4) fixe par rapport au mouvement de rotation du transmetteur (7, 8 ; 13 ; 21 ; G₁-G₃), captant les signaux du transmetteur, sachant que le récepteur (4) et le transmetteur (7, 8 ; 13 ; 21 ; G₁-G₃) sont disposés l'un par rapport à l'autre de manière à ce que les signaux du transmetteur, captés par le récepteur (4), reflètent la position relative du volant de direction par rapport au récepteur (4) **caractérisé par le fait qu'**il est prévu un transmetteur (7, 8 ; 13 ; 21 ; G₁-G₃) constitué d'au moins un aimant transmetteur couplé au mouvement rotatif du volant de direction ainsi qu'un récepteur constitué d'un élément convertisseur magnétostrictif (4) avec un fil convertisseur (9, 12 ; 21, 33) allongé, s'étendant sur une zone définie d'un arc de cercle, réagissant de manière magnétostrictive et avec un capteur d'oscillations (10, 35) disposé à l'une des extrémités du fil convertisseur (9, 12 ; 21, 33), sachant que le champ magnétique de l'aimant transmetteur (7, 8 ; 13 ; 21 ; G₁-G₃) donne des impulsions en différents endroits du fil convertisseur (9, 12 ; 21, 33) en fonction de la position du volant de direction.

2. Appareil de capteur de l'angle de braquage selon la revendication 1 **caractérisé en ce que** le fil convertisseur (9, 33) peut s'étendre sur une zone en arc de cercle inférieure à 360°, notamment inférieure ou égale à 180°, et que l'on affecte au transmetteur au moins suffisamment d'aimants transmetteurs (7, 8 ; G₁-G₃), de sorte que le fil convertisseur (9, 33) soit activé par le champ magnétique d'un aimant transmetteur (7, 8 ; G₁-G₃) quelle que soit la position du volant de direction.

3. Appareil de capteur de l'angle de braquage selon la revendication 1 **caractérisé en ce que** le fil convertisseur (12, 21) s'étende hélicoïdalement sur plusieurs cercles plein et dispose d'un nombre de spirales correspondant au nombre de tours de volant possibles et que le ou les aimants transmetteurs soient entraînés côté intérieur par rapport à la spirale du fil convertisseur (12).

4. Appareil de capteur de l'angle de braquage selon la revendication 3, **caractérisé en ce que** le fil convertisseur (12) soit disposé sur un axe affecté à la colonne de direction (14) de sorte que, lors de la rotation du volant de direction, le fil convertisseur (12) soit mobile sur l'axe longitudinal par rapport à la colonne de direction (14).

5. Appareil de capteur de l'angle de braquage selon l'une des revendications 1 à 4 **caractérisé en ce que** l'on prévoie en guise de transmetteur une plaque transmetteuse segmentée sur son pourtour des zones magnétiques codées différemment.

6. Appareil de capteur de l'angle de braquage selon la revendication 5, **caractérisé en ce que** les segments transmetteurs magnétiques présentent des intensités de champ différentes dans les zones magnétiques.

7. Appareil de capteur de l'angle de braquage selon la revendication 5, **caractérisé en ce que** les segments transmetteurs magnétiques (7, 8) soient, en ce qui conceme leur polarité par rapport au fil transmetteur (9), opposés l'un à l'autre, de sorte que l'activation du fil convertisseur (9) par le segment transmetteur magnétique (7) générera un tracé d'impulsion différent par rapport à une activation du fil convertisseur (9) par le segment transmetteur (8).

8. Appareil de capteur de l'angle de braquage selon la revendication 1 ou 2, **caractérisé par le fait qu'**au moins deux aimants transmetteurs (G₁-G₃) soient prévus, disposés les uns par rapport aux autres avec un écart angulaire différent, de telle sorte que les aimants transmetteurs (G₁-G₃) prévus soient disposés de manière asymétrique les uns par rapport aux autres.

9. Appareil de capteur de l'angle de braquage selon la revendication 8 **caractérisé en ce que** les aimants transmetteurs (21 ; G₁-G₃) aient une forme de C et qu'à l'intérieur du logement (25, 32) en forme de C passe le fil convertisseur magnétostrictif (24, 33).
